# EUROPEAN PATENT APPLICATION

(11) **EP 4 759 618 A1**
(43) Date of publication of application: **17.06.2026**
(21) Application number: 25221992.8
(22) Date of filing: 09.12.2025
(51) Int. Cl.: B60L 53/14, B60L 53/16, B60L 53/18, B60L 53/30, B60L 53/31, H02J 7/00

(54) **WALL-MOUNTABLE ELECTRIC VEHICLE CHARGER**

(30) Priority: 10.12.2024 NL 2039282
(71) Applicant: Prodrive Technologies Innovation Services B.V., 5692 EM Son en Breugel (NL)
(72) Inventor: Versleegers, Joris, 5692 EM Son en Breugel (NL)
(74) Representative: Arnold & Siedsma

(57) **Abstract**

A wall-mountable electric vehicle, EV, charger, comprising a front and a rear housing part, the rear housing part to be secured to a structure, such as a wall, and comprising a cable opening for receiving an external cable, the front housing part to be mounted on the rear housing part, such that the front and rear housing part form an enclosure, wherein the rear housing part comprises one or more mounting means configured to be connected with one or more complementary mounting means of the front housing part, and wherein the mounting means and complementary mounting means are configured to mount the rear housing part to the front housing part in a first and a second orientation relative to the front housing part for forming the enclosure, such that the cable opening faces different directions, and/or has different relative positions, relative to the front housing part in the first and the second orientation, respectively.

## Description

### FIELD

The present disclosure relates to a wall-mountable electric vehicle charger and a method of installing a wall-mountable electric vehicle charger.

### BACKGROUND

Due to ever-increasing utilization of electric vehicles (EVs) worldwide, an increasing amount of charging points for EVs are installed in locations of convenience, such as private, commercial, and public parking spaces. High power EV chargers, such as DC fast chargers, are generally deployed at purpose-built charging locations, whilst existing parking spaces are generally equipped with AC EV chargers that can be connected to the regular power grid and require less space to be installed.

Such AC chargers may for instance be mounted on an existing building structure, such as on a wall, and are referred to as "wall boxes" or wall-mountable EV chargers. Wall boxes need to be connected to the existing power grid and/or communication networks through external cables. Depending on the location where the wall box is installed, those external cables can originate from various directions. For instance, a wall box installed on the wall of a regular free-standing building, at ground level, is likely to receive power from an underground cable, such that the external power cable enters the wall box from the bottom. In another instance, a wall box may be installed in a parking garage, below ground level, such that the external power cable is more likely to enter the wall box from the top.

It is preferable for ease of installation, mitigation of cable damage, as well as aesthetics, that the external cable enters the wall box in a substantially straight line, or at least following a trajectory that is as direct as possible. Accordingly, housings of wall boxes meant to accommodate bottom and top entry may be typically equipped with cable openings at both the bottom and top. However, this increases the chances of water and/or debris infiltration into the housing, as openings at the top or at the bottom may be left unused and may potentially not be properly sealed during installation. In addition, providing redundant cable openings, cable glands, sealing material, et cetera, to a housing is expensive in terms of materials and manufacturing. Accordingly, there is a need to improve the housing of wall-mountable electric vehicle chargers in terms of costs, convenience, and mitigation of damage.

EP4464542 discloses a wall mountable backplate for securing an electro vehicle service equipment, EVSE, to a wall is described. The wall mountable backplate includes a housing having one or more openings for guiding one or more cables into the housing. The housing is configured for receiving an electrical connector having a plurality of electrical contacts for connecting a plurality of corresponding electrical contacts of the EVSE. The housing has one or more positioning elements for mating with corresponding positioning elements of the EVSE. Further, the housing has one or more mounting elements for either mounting a front cover for providing an enclosed environmentally protected interior volume or mounting the EVSE to the housing. WO2024/200703A1 discloses a charge-point assembly. The charge point assembly comprises a body. The body comprises a conduit for a power supply cable. The conduit defines a curved path extending at least part-way between an inlet for receiving the power supply cable from the conduit and an opening at an outer surface of the body. In use, the curved path extends below a height of the opening and the inlet.

US2011/172839A1 discloses an EVSE system includes an electric vehicle supply circuit, and a timer adapted to automatically control the electric vehicle supply circuit. The timer may be adapted to enable and/or disable the electric vehicle supply circuit at one or more predetermined times. The timer may be coordinated with a scheduling system such as a calendar utility on a computer or portable communication device such as a smart phone. The system may include a user interface for the timer. The user interface may include an embedded server such as an embedded web server to enable a user to program the timer through the Internet.

US2008/030971A1 discloses a network outlet fixture providing wall-mounted LAN jacks. The fixture may include an in-wall power supply and be configured for mounting within a conventional multi-gang wall box. The power supply may be directly connected to an adjacent wall outlet, which serves as a power source, in the same or an adjacent wall box. The fixture may include both network switching and fiber-to-copper media converter functionality. The fixture may be configured to disconnect the power source upon removal of a face plate of the fixture. Further, the fixture may be configured to allow mounting of the jack-supporting structure in any one of several different positions relative to a remainder of the outlet fixture. This allows for presentation of the LAN jacks in a certain preferred orientation while permitting the remainder of the outlet fixture to be mounted in several different orientations relative to a wall.

### SUMMARY

In view of the above, the present disclosure provides a (wall-mountable) EV charger comprising a front housing part and a rear housing part. The rear housing part is configured to be secured to a structure, such as a wall, and comprises at least one cable opening for receiving one or more external cables. The front housing part is configured to be mounted on the rear housing part, such that the front housing part and rear housing part form an enclosure. The rear housing part comprises one or more mounting means configured to be connected with one or more complementary mounting means of the front housing part. The mounting means and complementary mounting means are configured to mount the rear housing part to the front housing part in a first orientation and a second orientation relative to the front housing part for forming the enclosure, such that the at least one cable opening faces different directions, and/or has different relative positions, relative to the front housing part in the first orientation and the second orientation, respectively.

By providing more than one relative orientation of the rear housing part with respect to the front housing part, the location of the at least one cable opening can be changed without affecting the orientation of the front housing part. In the first orientation, the at least one cable opening faces a first direction , and/or has a first relative position, relative to the front housing part, while in the second orientation, the at least one cable opening faces a second direction , and/or has a second relative position, relative to the front housing part. In this way, a versatile EV charger with more than one entry direction, and/or entry location, for the at least one cable can be obtained allowing a flexible installation and repurpose of the EV charger to different locations with different entry directions, and/or entry locations. It is noted that the front housing part may comprise user interface components, such as electrical charging sockets, displays, interactive elements, payment terminal, et cetera, that are required to be in a certain orientation. Hence, simply rotating the EV charger as a whole to change the location of the cable opening(s) is not viable. In contrast, an EV charger is provided with an orientable rear housing part and a fixedly oriented front housing part. Further, by providing an orientable rear housing part, the number of cable openings, along with the required glands, seals, and so on, can be optimized, leading to a reduction of parts and costs. In addition, the reduction of the number of cable openings reduces installation errors and interfacing issues, which may lead to dirt contamination, and water leaks or the like. Moreover, the external cables can be routed to the EV charger as directly as possible, which improves the aesthetics of the finished installed product. Whilst the above example states a first and a second orientation, it is noted that the rear housing part may have many alternative orientations, such as a first, second, third, fourth, fifth, sixth, seventh, eight orientation, et cetera, depending on the arrangement of the mounting means and complementary mounting means. In the rest of the text, wall-mountable and structure-mountable may be used interchangeably to refer to the EV charger being suitable for being mounted on a surface of a support structure. In that sense, the terms wall-mountable are to be read broadly as meaning mountable on a surface and not strictly a vertical one. Although typically the structure on which the EV charger may be mounted may be a wall, any other suitable structures may be envisaged by a skilled person, such as a pillar, a ceiling, a floor, a door, scaffolding, a facade, a structural fabric, et cetera.

Each cable opening preferably faces a direction having a component in a common direction. For instance, the rear housing part may comprise two or more cable openings, wherein each cable opening faces a direction that has a vertical component facing a common direction, such as upwards or downwards. Accordingly, cable openings may be only present roughly in a direction wherein they are needed (e.g., given the location from which the external cable roughly originates). In this way, cable openings with distinct but compatible cable opening directions (in terms of field of view from the cable opening perspective) may be provided to further increase the versatility of the EV charger and its ease of installation. In other words, there may be only one main entry direction for the external cables, said main entry direction varying depending on the orientation.

Preferably, each cable opening faces substantially a common direction. For instance, the rear housing part may comprise two or more cable openings, wherein each cable opening faces the common direction, such as upwards or downwards in a situation wherein the rear housing is mounted to a structure, such as a wall. In this way, the one or more external cables may enter the EV charger in parallel to each other. In other words, there may be one single entry direction for the external cables depending on the orientation. Alternatively, an embodiment with a plurality of sets of cable openings may be envisaged, wherein preferably each cable opening of a set faces substantially a common direction of that set.

At least part of the mounting means and/or the complementary mounting means may be arranged in a pattern that has an order of rotational symmetry, preferably wherein the pattern is a rectangle, or a regular polygon. For instance, a rectangular arrangement of several mounting means and complementary mounting means allows for the rear housing part to be rotated 180 degrees, and then be joined with the front housing part in the same manner through those several mounting means and complementary mounting means. As a further example, a round rear housing part may have several mounting means in a hexagonal arrangement, and the front housing part may have corresponding complementary mounting means, such that the rear housing part may be oriented in six different orientations without affecting the orientation of the front housing part.

The housing, comprising the front housing part and the rear housing part, may be rectangular, a regular polygon (e.g., triangle, square, hexagon, octagon, et cetera), or circular. In other words, the housing may have an order of rotational symmetry. Preferably, the one or more cable openings are all arranged on a same side of the rear housing part of such a regular polygonal housing. Alternatively, one or more cable openings may be provided on more than one side of the rear housing part of such a regular polygonal housing, wherein preferably each cable opening faces a direction having a component in a common direction, and further preferably wherein each cable opening faces a direction having a major component in the common direction. The specific order of symmetry may be equal to the amount of potential common directions for the cable openings arranged on one side of the rear housing part of such a regular polygonal housing. For instance, a square housing with cable openings on one side has four possible common directions and has an equal order of rotational symmetry (C₄). Similarly, a hexagonal housing with order six (C₆) rotational symmetry, has six possible common directions when the cable openings are placed at one side of the hexagonal housing.

A mechanical interface between the front housing part and rear housing part may have an order of rotational symmetry. The mechanical interface may for instance be formed by an edge of the front housing part and an edge of the rear housing part, wherein, when the edges are engaged, the front housing part and the rear housing part form the enclosure. The edges may thus have the same contour, and preferably have an order of rotational symmetry and/or mirror symmetry (e.g., a rounded rectangular interface is both rotationally symmetric (C₂) and mirror symmetric about its minor axis). In this way, installation and repurposing can be improved.

The rear housing part may be provided with an interconnect board for connection with the one or more external cables. The front housing part may be provided with a charging assembly (which may alternatively be referred to as a charging interface). The charging assembly may comprise one or more electrical and/or mechanical components that allow for, inter alia, the charging operation of the EV to be carried out, such as charging sockets and/or charging cables, user interface(s), payment terminal(s), displays, one or more processors for managing the processes (e.g., charging process, communication process, payment process, power management process, et cetera). It is noted that the charging assembly may form a part of the front housing part itself. In other words, the front housing part and the charging assembly may be provided in one piece (e.g., a monolithic or integral construction or the like). In this way, installation operations on the interconnect board may be performed while ensuring some clearance from the front housing part. The interconnect board may be configured to be coupled with the charging assembly when the front housing part is mounted to the rear housing part in the first orientation and the second orientation. In this way, safe and reliable electrical contact between the interconnect board and the charging assembly may be achieved when mechanically mounting the front housing part to the rear housing part.

Optionally, the interconnect board and the charging assembly each comprise complementary docking connectors. Such connectors offer a reliable electrical coupling between the interconnect board and the charging assembly by physical (docking) contact when mounting the front housing part while allowing an easy and practical connection of the external cables. Optionally, the interconnect board is mountable to the rear housing part with a fixed relative position with respect to the front housing part in the first orientation and the second orientation of the rear housing part. In other words, the interconnect board may be rotated with respect to the rear housing part in the same amount as the rear housing part with respect to the front housing part. For instance, when the rear housing part is rotated 180 degrees with respect to the front housing part, the interconnect board may also be rotated by 180 degrees with respect to the rear housing part, such that the orientation of the interconnect board with respect to the front housing part remains the same. In this way, irrespective of the orientation of the rear housing part, the interconnect board and the charging assembly remain mechanically (preferably via the docking connectors) and hence electrically compatible with each other. It is noted that typical connectors may not be rotationally symmetric, for instance due to the presence of both power and signal interfaces.

Optionally, the rear housing part is provided with mounting points to which the interconnect board can be mounted in the first orientation and the second orientation of the rear housing part. At least part of the mounting points may be arranged in a pattern that has an order of rotational symmetry, preferably wherein the pattern is a rectangle, or a regular polygon. In this way, an operator may select the mounting points suited for a given orientation associated with one installation location, and may change them when repurposing the EV charger to another installation location. The interconnect board may further comprise one or more cable strain relief clamps.

The complementary docking connectors may comprise communication ports and/or electrical power connector ports. The ports of the docking connector of the interconnect board and of the charging assembly may, in use, be interconnected such that the electrical signals/power may be routed from the external cable(s) to the charging assembly of the front housing part, through said complementary docking connectors.

The charging assembly may comprise one or more charging ports for connecting an EV charging cable, such as a charging port for Type 2 (Mennekes) connectors, a charging port for GB/T charging standard connectors, and/or a charging port for NACS connectors.

The charging assembly may comprise a user interface and/or a payment terminal, preferably a contactless payment terminal. The user interface may comprise a touch screen for displaying information and/or receiving inputs from a user. The charging assembly may further comprise a non-touch display for displaying information. The information displayed on the charging assembly may relate to charging status, charging power, availability, error messaging, payment status, pricing, et cetera. In that sense, the charging assembly may thus be regarded as having an orientation by default, rendering its reorientation impractical, and creating the need for other parts of the EV charger to cope with the desire for various cable entry directions.

The rear housing part may be provided with alignment features configured to engage with complementary alignment features of the front housing part to aid in mounting the front housing part to the rear housing part in the first orientation and the second orientation. These alignment features and complementary alignment features may come in contact with each other before the mechanical interfaces between the front and rear housing parts meet, and may require less precision than directly mating the mechanical interfaces, thereby helping the operator reaching proper mating of the front and rear housing parts. Optionally, at least part of the alignment features and/or the complementary alignment features are arranged in an arrangement that has an order of rotational symmetry. Optionally, at least part of the alignment features and/or the complementary alignment features are structural ribs. The arrangement may additionally be mirror symmetric. The structural ribs may have a curved contour so as to provide a fail-safe alignment in both the first and the second orientation of the rear housing part. The alignment features, for instance the structural ribs, may have any shape, height, form, or contour that ensures correct alignment of the front housing part with the rear housing part. Particularly, the alignment features and complementary alignment features may aid in aligning the complementary docking connectors of the interconnect board and the connectors of the charging assembly.

The complementary mounting means may comprise through-holes through the front housing part. The mounting means may comprise mounting holes, preferably aligned with the through-holes, that are configured to receive a mounting element, such as a bolt or screw or the like. The mounting holes may be provided with internal screw thread. The front housing part may be provided with one or more covers, such as cover plates, for covering the complementary mounting means, such as the through-holes. The cover plates may comprise a release mechanism to release them from the front housing part. The release mechanism may use a proprietary tool, such that unauthorized individuals are not able to remove the cover plates to avoid tampering with the internals of the EV charger.

One of the mounting means and the complementary mounting means may comprise a resilient hook. The other one of the mounting means and the complementary mounting means may comprise a latch, preferably configured to engage with the resilient hook, so as to form a snap connection, particularly between the front housing part and the rear housing part.

A mechanical interface between the front housing part and rear housing part may be provided with a seal, so as to seal the enclosure, preferably wherein the seal seals the enclosure in a watertight manner. In this way, issues such as leakage and associated electrical faults are avoided and longevity is increased.

The at least one cable opening may be provided with a cable gland and/or a removable seal. The cable gland is used to seal the housing when a cable is fed therethrough. The removable seal may be placed to seal unused cable openings. Cable openings may be present at any side of the rear housing part, such as one or more sides and/or a rear facing side of the rear housing part.

The wall-mountable EV charger may comprise a separation element configured to be mounted to the front housing part, and/or the rear housing part, to divide the enclosure into a front enclosure part associated with the front housing part and a second enclosure part associated with the rear housing part. Accordingly, the sensitive electrical components in the front housing part are shielded with respect to, for instance, the external cables or other components in the rear housing part, and are protected against tampering (e.g., tampering with the payment terminal or the like). The separation element may be provided with a tamper evident seal, such that unauthorized removal of the separation element from at least the front housing part can be detected afterwards.

In a second aspect, the present disclosure provides a method of installing the wall-mounted EV charger according to the above, comprising the steps of:
- determining a location of the one or more external cables to be connected within the enclosure of the charger;
- determining a suitable orientation for the rear housing part, being either the first orientation or the second orientation, based on the location of the external cable;
- mounting the rear housing part to a structure, such as a wall, in the suitable orientation; and
- mounting the front housing part to the rear housing part by means of the mounting means of the rear housing part and the complementary mounting means of the front housing part.

The method allows for a safe, installation-error mitigating, and aesthetically pleasing EV charger installation.

The wall-mounted EV charger used in the method may be provided with an interconnect board for connection with the one or more external cables, wherein the method then further comprises, after mounting the rear housing part to a structure, such as a wall, in the suitable orientation, and before mounting the front housing part to the rear housing part, the steps of:
- mounting the interconnect board to the rear housing part, preferably according to the orientation of the front housing part;
- routing at least one external cable through at least one cable opening; and
- connecting the at least one external cable with the interconnect board.

The steps of routing and connecting of the one or more external cables may be repeated for each external cable and associated cable opening. It is here assumed that all cables come from the same location and have the same main entry direction.

Further preferably, in the wall-mounted EV charger used in the method, the front housing part is provided with a charging assembly, the interconnect board and the charging assembly each comprise complementary docking connectors, and the step of mounting the front housing part to the rear housing part further comprises:
- connecting the complementary docking connectors of the interconnect board and the charging assembly with each other.

### BRIEF DESCRIPTION OF THE DRAWINGS

Several aspects of the present disclosure are further elucidated through the following figures, wherein:
- FIG. 1 depicts a schematic representation of an electric vehicle (EV) and two wall-mounted EV chargers;
- FIG. 2 depicts a schematic representation of two mounting options of a wall-mountable EV charger;
- FIG. 3 depicts an exploded perspective front view of a wall-mountable EV charger with a rear housing part in a first orientation;
- FIG. 4 depicts the wall-mountable EV charger of FIG. 3 in an exploded perspective rear view;
- FIG. 5 shows a schematic front view of a rear housing part of the wall-mountable EV charger of FIGS. 3 and 4;
- FIG. 6 depicts an exploded perspective front view of a wall-mountable EV charger with a rear housing part in a second orientation;
- FIG. 7 depicts the wall-mountable EV charger of FIG. 6 in an exploded perspective rear view;
- FIG. 8 depicts a schematic front view of a rear housing part of the wall-mountable EV charger of FIGS. 6 and 7;
- FIG. 9 depicts an exploded perspective front view of a wall-mountable EV charger, with one rear housing part in the first orientation and another rear housing part in the second orientation; and

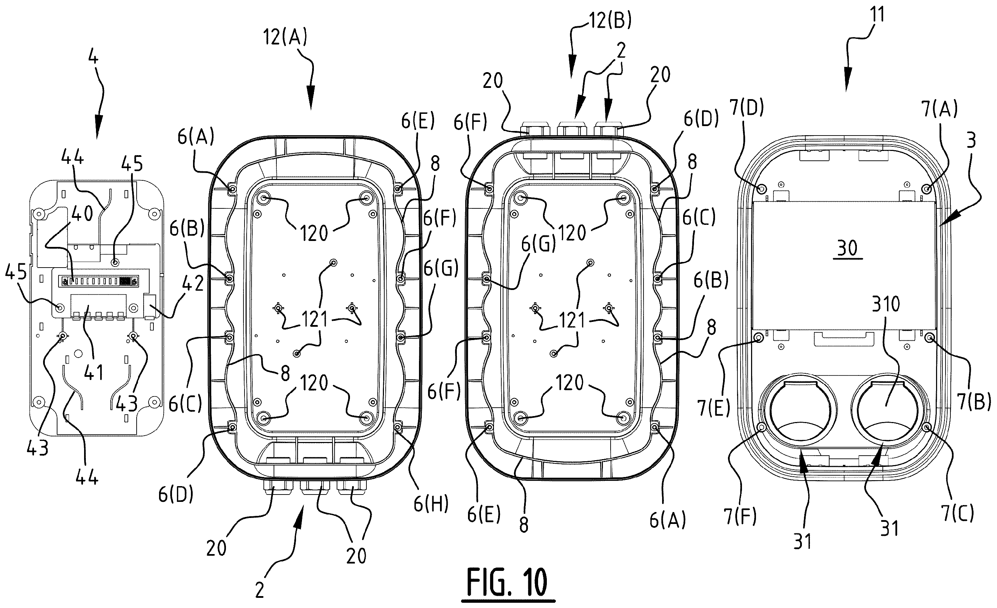

- FIG. 10 depicts a schematic front view of an interconnect board, a rear housing part in a first orientation, a rear housing part in a second orientation, and a front housing part of a wall-mountable EV charger.

### DETAILED DESCRIPTION

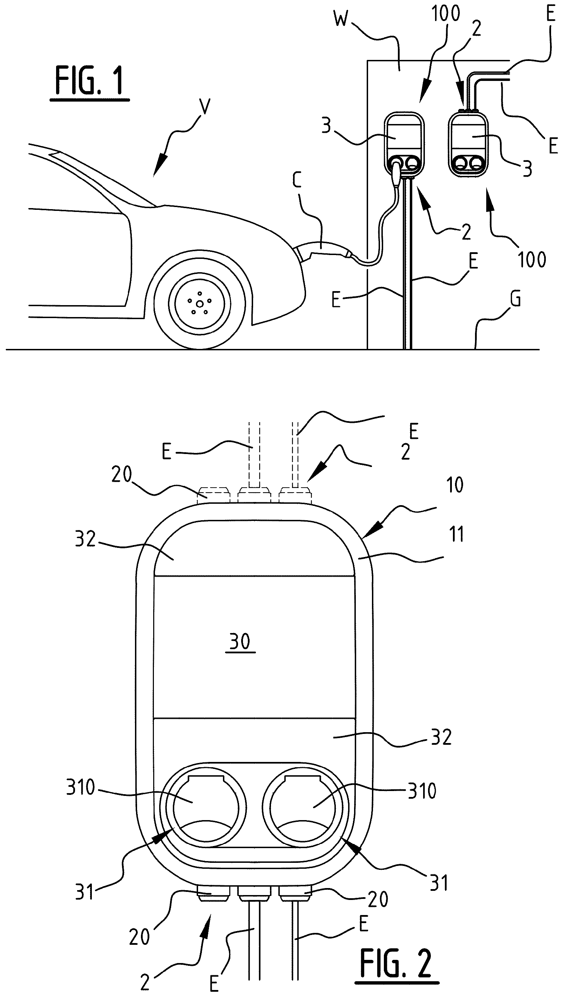

In FIG. 1, an electric vehicle V is shown that is connected, via a charging cable C, with a wall-mounted EV charger 100. The charger 100 connected with the vehicle V is connected with external cables E originating from the ground G and running along the wall W on which the charger 100 is mounted. Accordingly, the cables E enter that charger 100 from the bottom through bottom-facing cable openings 2. The second charger 100 on the right hand side is also connected with external cables E. However, in this case the external cables E enter that charger 100 from the top, through upward-facing cable openings 2. The charging assemblies 3 of both chargers 100 have the same orientation, such that both can be used in the same manner by a user.

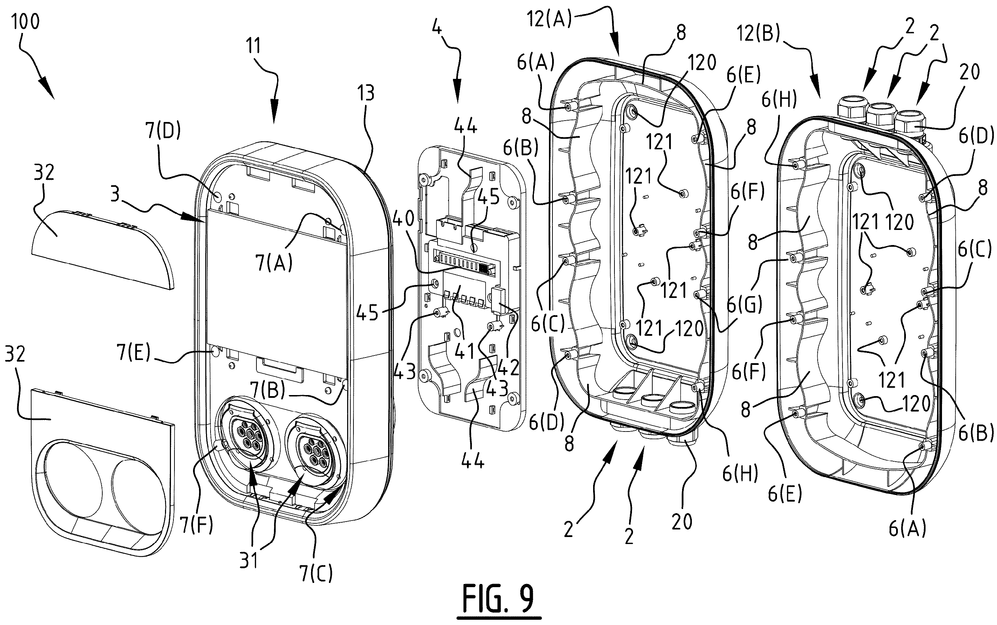

FIG. 2 shows two mounting options of a wall-mountable EV charger 100 in a single front-facing view. The charger 100 comprises a housing 10 that is made up of a front housing part 11 and a rear housing part 12, as described below. On the front of the housing 10, and particularly the front housing part 11, the charging assembly 3 is present. The charging assembly 3 comprises a display 30 for displaying information to a user. The display 30 may be a touch-sensitive display 30 that allows touch-input from a user. The charging assembly 3 further comprises charging ports 31 to which a charging cable C for an EV may be connected (see, e.g., vehicle V of FIG. 1). When not in use, the charging port 31 is covered by a spring-loaded cap 310 that is biased, through a spring-loading, in the closed position. The cap 310 protects the socket against exterior influences, such as rain and debris. The charging assembly 3 further comprises cover plates 32 that cover complementary mounting means (not shown here) as explained in relation to FIG. 9 below.

The charger 100 is equipped with cable openings 2 that are provided in the rear housing part 12 (not shown in FIG. 2) and allow external cables E to be routed into the housing 1. The openings 2 are provided with cable glands 20 to seal the openings 2 once a cable E has been fed through it. The cables E and cable openings 2, including the glands 20, are shown here on a downward facing side of the charger 100, similar to the left-hand charger 100 of FIG. 1. However, in dashed lines it is also indicated that those elements can be on the upward facing side of the charger 100, similar to the right-hand charger 100 of FIG. 1.

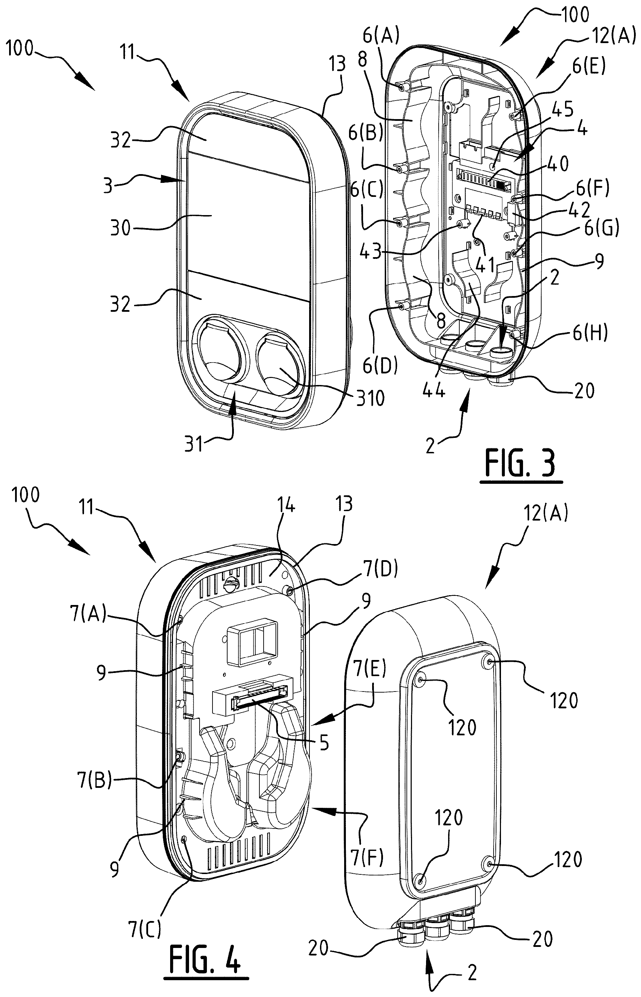

In FIG. 3 the charger 100 is shown in a disassembled state, wherein the front housing part 11 is removed from the rear housing part 12 (rear housing part 12A in its first orientation). In a mounted state, the front and rear housing parts 11, 12, form a housing 1, the internal enclosure of which is sealed by means of a seal 13 between the front and rear housing parts 11, 12. The rear housing part 12 is provided with an interconnect board 4, to which external cables E (not shown here) can be connected, which may include power cables and/or communication cables. The interconnect board 4 comprises a docking connector 40 that enables signals and/or power to be transferred from the external cables E, through the interconnect board 4, to the front housing part 11, which comprises a compatible docking connector 5 as shown in FIG. 4. The board 4 further comprises power connectors 41 to which external power cables E can be connected, as well as communication connectors 42 to which external communication cables E may be connected.

The rear housing part 12 further comprises mounting means 6 configured to cooperate with complementary mounting means 7 in the front housing part 11. Some of the mounting means 6 are aligned with the complementary mounting means 7 when the rear housing part 12A is in the its first orientation, as shown in FIGS. 2 - 5, and some of the mounting means 6 are aligned with the complementary mounting means 7 when the rear housing part 12B is in its second orientation, as shown in FIGS. 2 (dotted lines) and 6 - 8, wherein some mounting means 6 align with the complementary mounting means in both the first and second orientation. For instance, mounting means 6A, 6D, 6E, and 6H are rotationally symmetrically arranged, such that they align in both orientations with, respectively, the complementary mounting means 7D, 7F, 7A, and 7C. On the other hand, mounting means 6C and 6G align, respectively, with complementary mounting means 7E and 7B, in the first orientation of the rear housing part 12, whilst mounting means 6B and 6F align, respectively, with complementary mounting means 7E and 7B in the second orientation of the rear housing part 12.

The rear housing part 12 further comprises wall-mounting holes 120 through which the rear housing part 12 can be mounted to a structure, such as a wall, by means of fastening elements, such as screws or bolts or the like. The rear housing part 12 also comprises alignment ribs 8 that provide structural rigidity, but also aid in aligning the front housing part 11 with the rear housing part 12 during assembly, as the front housing part 11 comprises complementary alignment ribs 9 that engage with the alignment ribs of the rear housing part 11. The complementary alignment ribs 9 are provided on a separation panel 14, that is mounted on the front housing part 11 and shields the interior of the front housing part 11 from the interior of the rear housing part 12. It shields the electronics housed in the front housing part 11, such as the payment terminal (not shown) or the like. The alignment ribs 8 are rotationally symmetrically arranged, such that the rear housing part 12 can be aligned with the front housing part 11 in its first orientation (rear housing part 12A) and its second orientation (rear housing part 12B).

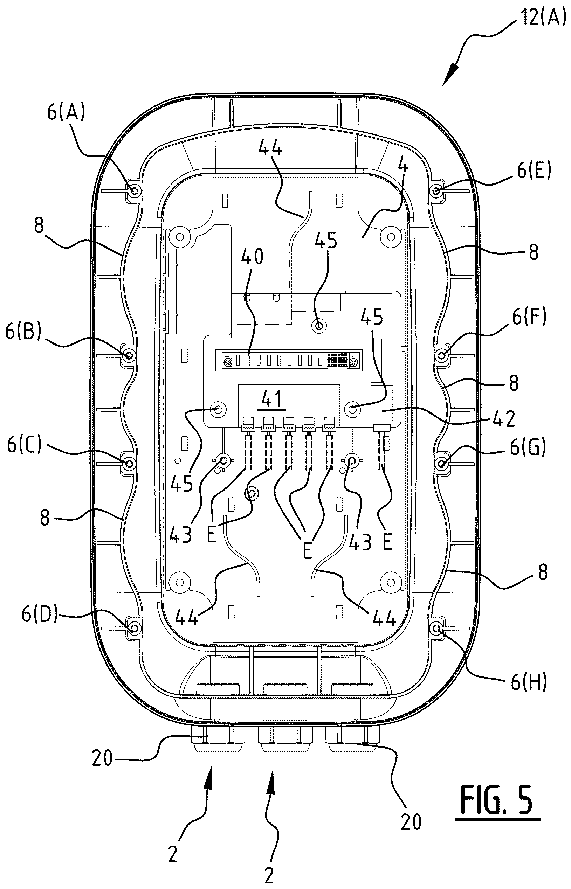

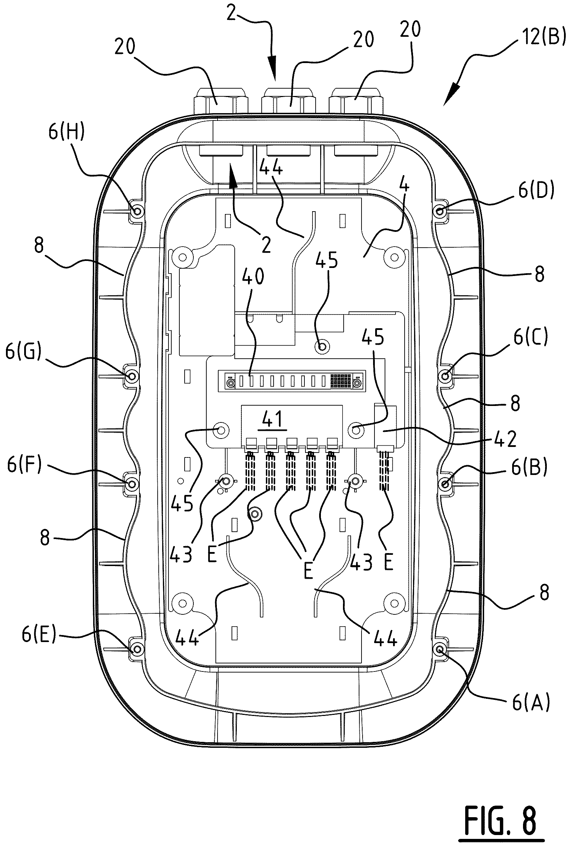

FIG. 5 shows a front view of the rear housing part 12 in its first orientation (rear housing part 12A). FIG. 8 shows a similar view, with the rear housing part 12 in its second orientation (rear housing part 12B). When the rear housing part 12 is rotated from its first to its second orientation, it is rotated, in the present example, by 180 degrees, such that the cable openings 2 point either upwards or downwards (see, respectively, right-hand side charger 100 of FIG. 1 and left-hand side charger 100 of FIG. 1). As described above, the interconnect board 4, in the present example, has a fixed orientation with respect to the front housing part 11 such that its docking connector 40 aligns with the docking connector 5 of the front housing part 11. Accordingly, the interconnect board 4 can be removed from the rear housing part 12, and remounted around with respect to the rear housing part as needed. External power cables E can be connected to the power connectors 41 of the interconnect board 4, and may for instance comprise a phase-1 wire, phase-2 wire, phase-3 wire, neutral wire, and ground wire connections. External communication cables E can be connected with the communication connectors 42 of the interconnect board 4. The board 4 also comprises two cable strain relief clamp mounts 43, to which a cable strain relief clamp (not shown) can be mounted. The board 4 may also comprise cable guides 44, for guiding cables fed into the cable openings 2 in the correct direction towards the connectors 41, 42. The board 4 is further provided with mounting holes 45 through which the board 4 can be fastened to the rear housing part 12. The rear housing part 12 comprises complementary board mounting points 121 for complementary cooperation with the mounting holes 45.

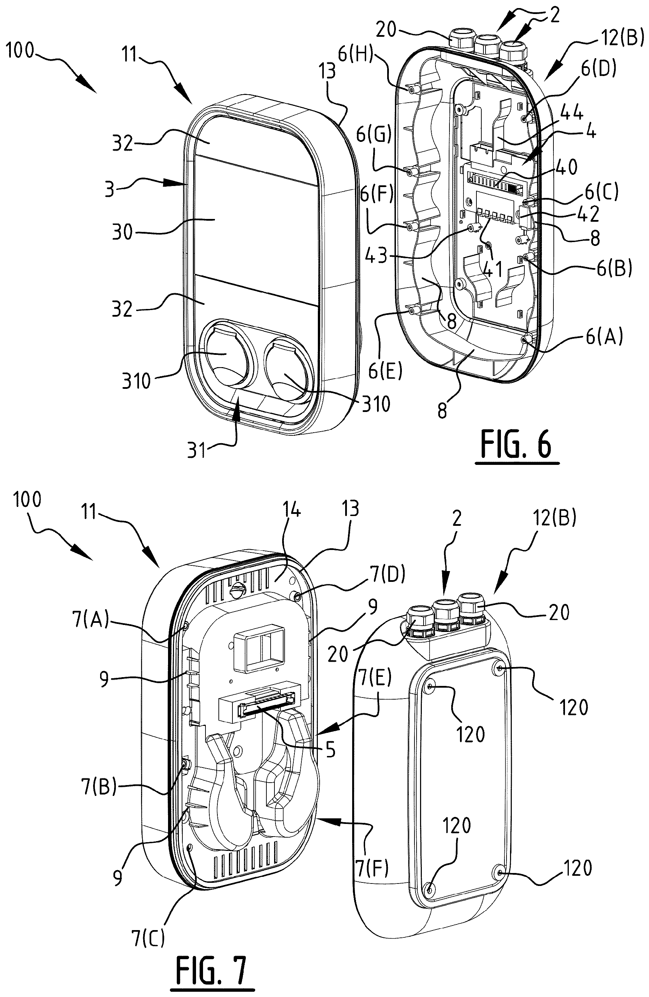

As mentioned above, FIGS. 6 and 7 correspond to FIGS. 3 and 4, except that the rear housing part 12 is depicted in its second orientation (rear housing part 12B). This means that it is rotated by 180 degrees compared to the rear housing part 12 of FIGS. 3 and 4, which depicts the rear housing part 12 in its first orientation (rear housing part 12A).

FIG. 8 shows the rear housing part 12 in a front view, in its second orientation (rear housing part 12B), similar to FIG. 5, which shows the rear housing part 12 in a front view in its first orientation (rear housing part 12A).

FIG. 9 shows an exploded view of the wall-mountable EV charger 100. This exploded view exposes the complementary mounting means 7 of the front housing part 11, as the cover plates 32 are removed. The complementary mounting means 7 are through-holes through the front housing part 11 in the present example. The interconnect board 4 is in this view also removed from the rear housing part 12A, 12B (here shown two times to illustrate both the first and second orientation of the rear housing part 12). This, in turn, exposes the complementary board mounting points 121, as well as a front view of the wall-mounting holes 120. Both instances of the rear housing parts 12A, 12B shown here can be mounted with the front housing part 11 and interconnect board 4 in their shown orientations. This thus allows for the person installing the wall-mountable EV charger 100 to choose whether the cable openings 2 should point upwards (rear housing part 12B) or downwards (rear housing part 12A), whichever is most favorable under the circumstances. Compared to a housing with openings both at the top and bottom (not shown), the present example mitigates installation errors, such as forgetting to seal unused cable openings, which may cause leaks and/or debris infiltration. Furthermore, the aesthetics of the installation are improved as regardless of the origin point of the external cables E, they can be routed directly into the housing 10, particularly the rear housing part 12. In addition, the added manufacturing costs associated with providing more cable openings 2, cable glands 20, removable seals (not shown), et cetera, are avoided. Whilst the present examples of the drawings depict two possible orientations for the rear housing part 12, it is noted that other housing shapes may allow more than two possible orientations. For instance, a round housing shape may allow many orientations depending on the amount of mounting means 6 and complementary mounting means 7 that are provided. Also, a square housing could allow for four orientations, whilst retaining the required orientation of the front housing part 11. A hexagonal housing may have six possible orientations, and an octagonal housing may have eight, et cetera.

Whilst the principles of the invention have been set out above in connection with specific examples, it is understood that this description is merely made by way of example and not as a limitation of the scope of protection which is determined by the appended claims.

## Claims

1. Wall-mountable electric vehicle, EV, charger (100), comprising:
a front housing part (11) and a rear housing part (12),
the rear housing part (12) configured to be secured to a structure, such as a wall, and comprising at least one cable opening (2) for receiving one or more external cables (E),
the front housing part (11) configured to be mounted on the rear housing part (12) , such that the front housing part (11) and rear housing part (12) form an enclosure,
wherein the rear housing part (12) comprises one or more mounting means (6) configured to be connected with one or more complementary mounting means (7) of the front housing part (11), and
wherein the mounting means (6) and complementary mounting means (7) are configured to mount the rear housing part (12) to the front housing part (11) in a first orientation and a second orientation relative to the front housing part (11) for forming the enclosure, such that the at least one cable opening (2) faces different directions, and/or has different relative positions, relative to the front housing part (11) in the first orientation and the second orientation, respectively.

2. Wall-mountable EV charger according to claim 1, wherein each cable opening (2) faces a direction having a component in a common direction, wherein preferably each cable opening (2) faces substantially the common direction.

3. Wall-mountable EV charger according to any of the preceding claims, wherein at least part of the mounting means (6) and/or the complementary mounting means (7) are arranged in a pattern that has an order of rotational symmetry, preferably wherein the pattern is a rectangle, or a regular polygon, and/or wherein a mechanical interface between the front housing part (11) and rear housing part (12) has an order of rotational symmetry.

4. Wall-mountable EV charger according to any of the preceding claims, wherein the rear housing part (12) is provided with an interconnect board (4) for connection with the one or more external cables.

5. Wall-mountable EV charger according to any of the preceding claims, wherein the front housing part (11) is provided with a charging assembly.

6. Wall-mountable EV charger according to claims 4 and 5, wherein the interconnect board (4) is configured to be coupled with the charging assembly when the front housing part (11) is mounted to the rear housing part (12) in the first orientation and the second orientation, wherein preferably the interconnect board (4) and the charging assembly each comprise complementary docking connectors.

7. Wall-mountable EV charger according to any one of claims 4-6, wherein the interconnect board (4) is mountable to the rear housing part (12) with a fixed relative position with respect to the front housing part (11) in the first orientation and the second orientation of the rear housing part (12), and/or
wherein the rear housing part (12) is provided with mounting points (121) to which the interconnect board (4) can be mounted in the first orientation and the second orientation of the rear housing part (12).

8. Wall-mountable EV charger according to any one of claims 5-7, wherein the charging assembly comprises one or more charging ports for connecting an EV charging cable, and/or
wherein the charging assembly comprises a user interface and/or a payment terminal, preferably a contactless payment terminal.

9. Wall-mountable EV charger according to any of the preceding claims, wherein the rear housing part (12) is provided with alignment features configured to engage with complementary alignment features of the front housing part to aid in mounting the front housing part to the rear housing part in the first orientation and the second orientation, wherein preferably at least part of the alignment features and/or the complementary alignment features are arranged in an arrangement that has an order of rotational symmetry, and/or wherein preferably at least part of the alignment features and/or the complementary alignment features are structural ribs (8, 9).

10. Wall-mountable EV charger according to any of the preceding claims, wherein the complementary mounting means (7) comprise through-holes through the front housing part and the mounting means comprise mounting holes, aligned with the through-holes, that are configured to receive a mounting element, such as a bolt or screw, and/or wherein one of the mounting means (6) and the complementary mounting means (7) comprise a resilient hook and the other one of the mounting means (6) and the complementary mounting means (7) comprises a latch configured to engage with the resilient hook, so as to form a snap connection, and/or
wherein a mechanical interface between the front housing part and rear housing part is provided with a seal, so as to seal the enclosure, preferably wherein the seal seals the enclosure in a watertight manner.

11. Wall-mountable EV charger according to any of the preceding claims, wherein the at least one cable opening (2) is provided with a cable gland (20), and/or wherein the at least one cable opening (2) is provided with a removable seal.

12. Wall-mountable EV charger according to any of the preceding claims, further comprising a separation element (14) configured to be mounted to the front housing part (11) and/or the rear housing part (12) to divide the enclosure into a front enclosure part associated with the front housing part (11) and a second enclosure part associated with the rear housing part (12).

13. Method of installing a wall-mounted EV charger (100) according to any one of the preceding claims, comprising the steps of:
determining a location of one or more external cables to be connected within the enclosure of the charger;
determining a suitable orientation for the rear housing part (12), being either the first orientation or the second orientation, based on the location of the external cable;
mounting the rear housing part (12) to a structure, such as a wall, in the suitable orientation; and
mounting the front housing part (11) to the rear housing part (12) by means of the mounting means (6) of the rear housing part (12) and the complementary mounting means (7) of the front housing part (11).

14. Method according to claim 13, wherein the wall-mounted EV charger is according to any one of claims 4-12, wherein after mounting the rear housing part (12) to a structure, such as a wall, in the suitable orientation, and before mounting the front housing part (11) to the rear housing part (12), the method further comprises the steps of:
mounting the interconnect board (4) to the rear housing part (12);
routing at least one external cable through at least one cable opening (2); and
connecting the at least one external cable with the interconnect board (4).

15. Method according to claim 14, wherein:
the front housing part (11) is provided with a charging assembly;
the interconnect board (4) and the charging assembly each comprise complementary docking connectors; and
the step of mounting the front housing part (11) to the rear housing part (12) further comprises:
connecting the complementary docking connectors of the interconnect board (4) and the charging assembly with each other.
